# EUROPEAN PATENT SPECIFICATION

(11) **EP 1 326 931 B1**
(45) Date of publication and mention of the grant of the patent: **12.05.2010**
(21) Application number: 01911938.7
(22) Date of filing: 16.03.2001
(51) Int. Cl.: C09D 5/22

(54) **LUMINESCENT PAINT**
LUMINESZIERENDE ANSTRICHE
PEINTURE LUMINESCENTE

(30) Priority: 03.10.2000 GB 0024164
(43) Date of publication of application: 16.07.2003
(73) Proprietor: Luminous Technologies Ltd., Greenock PA16 0EQ (GB)
(72) Inventor: COOPER, William, Robert, Shore Road, Kilcreggan G84 0HQ (GB); JESS, Howard, Mitchell, Glasgow G13 1DN (GB)
(74) Representative: Ouzman, Beverley Nicola Claire
(86) International application number: PCT/GB2001/001151
(87) International publication number: WO 2002/028973

(56) References cited:
- GB-A- 2 133 701
- PATENT ABSTRACTS OF JAPAN vol. 014, no. 176 (C-0707), 9 April 1990 (1990-04-09) & JP 02 024366 A (DAINIPPON TORYO CO LTD;OTHERS: 01), 26 January 1990 (1990-01-26)
- DATABASE WPI Section Ch, Week 199920 Derwent Publications Ltd., London, GB; Class A85, AN 1999-232985 XP002168437 & JP 11 061115 A (LONSEAL CORP), 5 March 1999 (1999-03-05)
- DATABASE WPI Section Ch, Week 199934 Derwent Publications Ltd., London, GB; Class A82, AN 1999-400354 XP002168438 & JP 11 158420 A (MIND KK), 15 June 1999 (1999-06-15)

## Description

The present invention relates to a method of detecting the quality of a coating.

Coatings on metal surfaces, whether for marine, industrial or domestic uses, rely heavily on the quality of the initial application for their performance. Factors affecting this application such as surface preparation, coating thickness and continuity, number of coats as well as subsequent coating damage caused by heat, abrasion, climate and impacts must be taken into account when considering performance.

For marine or aircraft uses, particularly military equipment, the quality of the application of the coating is especially important. In high performance military aircraft coating damage due to corrosion and bird strikes is sometimes difficult to detect.

The inspection and survey of coatings on aircraft, sea going vessels, underwater sections of offshore drilling rigs and production platforms as well as land installations such as oil and chemical storage tanks, reaction vessels in industrial plant, rail tank cars and the like is time consuming and therefore costly, both in terms of the skilled manpower used in the inspection itself, but also in terms of the time out of service of the inspected unit. Owing to the complicated nature of some of the structures it is also almost impossible to carry out an adequate survey of vital parts of the structure with any degree of certainty as to the completeness of the survey.

Following the Exxon Valdez disaster, legislation such as the U.S. Oil Pollution Act of 1990 and International Marine Pollution Regulations (MARPOL) have required a large increase in the water ballast tank and double hull areas of tankers, all requiring robust coatings. Recently bulk carriers have likewise suffered a number of sinkings so that classification societies such as Lloyds Register have focussed attention on periodic surveys of the coating condition of-hulls of such vessels and have developed suitable hull condition monitoring programs. When building one of these large ships as much as 14% of the total time required may be allocated to coating. Subsequent annual repair costs due to corrosion of marine tanks in U.S. Navy vessels for example is estimated by the U.S. Navy itself at USS64 million. The U.S. Navy also predicts that if this cost could be cut by a better quality of initial application and inspection the savings would reach US$2.03 billion over the next 20 years.

According to a first aspect, the invention provides a method as described in claim 1.

Luminescent paints as such normally have greater than 30% of luminescent pigments introduced and typically the level of luminescent pigment is as much as 45% by weight. Thus the coating of the invention can by no means be classifiable as a luminescent paint.

The coating, comprising a paint, may be oil based rather than the preferred epoxy base.

Clearly the gaps indicate failure to provide a complete or unbroken coating, whereas brighter or weaker luminescence indicates thicker or thinner areas of the coating.

The ultraviolet illumination of the coating provided in the invention should firstly be carried out during the initial application of the coating since this assists the applicator in identifying and covering any area he has missed, and also to increase to the correct level the thickness of the coating where thinness is identified by the ultraviolet illumination. The illumination provided by the invention should secondly be carried out by the inspectors of the coating to similarly identify areas of missing coverage of the coating, thin areas in the coating, damage to the coating, etc.

The image of the coating so illuminated with ultraviolet light as provided by the invention should in a preferred example be digitally recorded by a suitable camcorder device as permanent evidence for surveys and for subsequent checking of the coating for damage or deterioration. These digitally recorded records can be readily stored for long periods, easily moved from construction point to head offices and used as evidence of completion of construction or maintenance contracts, and later used as comparison with later surveys of the same structure to determine areas or extent of coating damage, erosion or deterioration.

As provided in the preferred example of the invention, as set out above, it is possible by noting the exact distance of the digital equipment recording the levels of luminescence from the ultraviolet illuminated coating being examined and comparing the readings with a table of values derived from that particular coating, to determine the thickness of the coating, thus indicating whether the coating is thicker or thinner than the desired standard. For this purpose the recording apparatus should be calibrated either before or after recording the luminescent image. Calibration may be made either by viewing an uncoated surface or by viewing a coating of paint lacking the luminescent pigment additive.

The method of the invention has been further discovered to indicate damage to aerospace vehicles, particularly those used for high velocity defence purposes where bird strikes or similar damage occurs to a surface coating of the coating of the invention. The method of the invention has also been discovered to reveal damage to coatings resulting from welding or other sources of heat affecting opposite side of the metal from the coating. The method of the invention will be useful in applying and inspecting coatings on metal or other surfaces in a wide range of situations, including any type of tank or storage compartment where a high degree of integrity of the coating (internal or external) is necessary. Examples would include chemical tanks, reaction vessels, ships ballast tanks, rail tank cars, and many others.

The method of the invention is also useful in applying and removing shop primer paints applied to steel shapes and plates used in heavy construction. Such initial protective coatings must be completely removed before the final coatings are applied and such complete removal can be facilitated and checked by use of the invention.

It is noted that the method of the invention also functions underwater so long as the illuminating ultraviolet light and recording apparatus are suitably waterproofed. The invention is thus useful for coating and inspecting such underwater structures as pipelines, bridge supports and offshore oil installations of all types. It will also function as a cost efficient means of checking the rate and amount of erosion of the antifouling coatings on the bottoms of ships' hulls without drydocking the vessel.

Further investigation using the method of the invention may reveal a further use as an indicator of stressed or cracked welded joints or seams in metals.

The economic advantages of the invention are compelling. Complete refurbishment of the ballast tank surfaces in a very large crude carrier currently costs about USS1.2 million so that any increase in life expectancy of the coatings is bound to result in considerable cost savings. It will be appreciated that the method of the invention is equally able to discover overcoating as well as undercoating. Furthermore, since inspection time may take up to 14% of the total coating time for new ship construction, any reduction in the time required for both the inspection as well as any remedial painting necessitated by the inspection must also result in significant cost reductions.

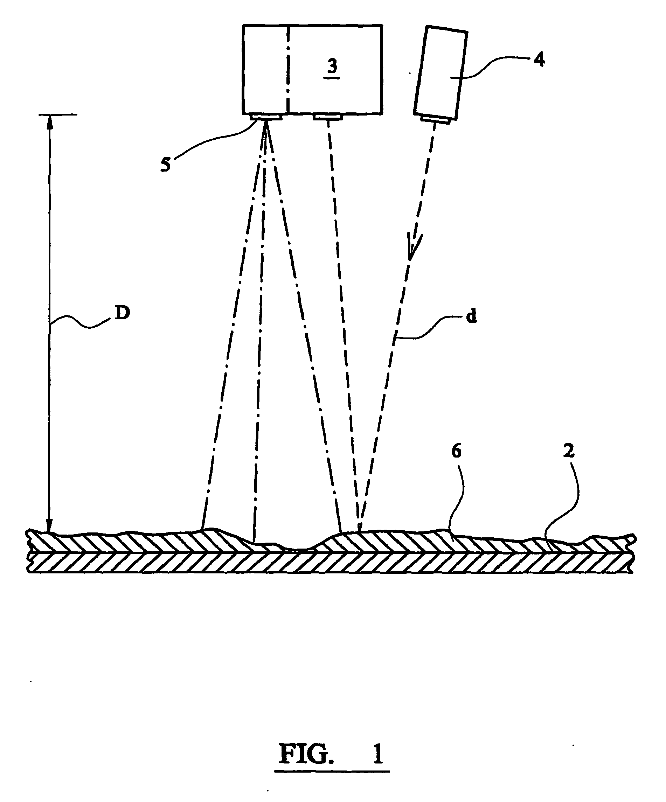

Figure 1 is a diagram of a coating quality detecting method not according to the invention.

Prior to coating, for example, a ship's ballast tank, a proprietary paint suitable for the application, in this case a marine grade epoxy based paint, has added to it luminescent pigment (an optically active additive - OAA) in a proportion by weight of less than 10% and preferably less than 1% of the epoxy based paint.

Ballast tank surface 2 is then illuminated by ultraviolet (UV) light from projector 4 fixed at a known distance from surface 2. A digital camera 3 with a fixed optical meter 5 is fixed at a known distance from surface 2. The UV sensitive meter 5 is then calibrated to "zero coating". Zero coating is deemed to be indexed to 100. The epoxy paint with OAA is then applied as coating 6 and projector 4 is then switched on and shone all over the coating to see if darker areas show thin coating or very dark patches show holidays. Thin or absent coating can be recorded by directing the meter 5 at the defective area and the calibrated meter will then read slightly less than 100 or 100 for zero coating. The defects can then be remedied and a recording of the coating can be finally made by the digital camera 3 with a coincident meter recording, which should show the 100 according to a predetermined table derived from the paint manufacturer. This enables the coating's thickness to be recorded swiftly without resort to conventional complicated and time consuming methods.

According to the invention, a second non-luminescent coating is applied over coating 6 and the same monitoring technique can be used to detect pin holes or holidays showing up brightly through the second coating.

## Claims

1. A method of detecting the quality or deterioration of a coating comprising:
applying a first coating to a clean surface,
applying a second coating over said first coating,
illuminating the said second coating with ultraviolet light and viewing the luminescent image so produced for gaps or variations in the intensity of the luminescence of the image, **characterized in that** said first coating comprises a paint in admixture with a luminescent pigment additive at less than 10% by weight, and said second coating is non-luminescent.

2. A method according to claim 1 wherein the paint is an epoxy based paint.

3. A method according to claim 1 wherein the paint is an oil based paint.

4. A method according to any one of claims 1 to 3 wherein the luminescent pigment additive is less than 1% by weight.

5. A method according to any one of claims 1 to 4 wherein the image is digitally recorded.

6. A method according to any one of claims 1 to 5 wherein the distance from the image to recording equipment used for the digital recording is measured and wherein the levels of luminescence from the image are compared with a table having predetermined values for the known thicknesses of said luminescent paint, used as a standard so as to determine the thickness of the coating.

## Patentansprüche

1. Ein Verfahren zum Erkennen der Qualität oder Schädigung einer Beschichtung, das Folgendes beinhaltet:
Auftragen einer ersten Beschichtung auf eine saubere Oberfläche,
Auftragen einer zweiten Beschichtung über die erste Beschichtung,
Beleuchten der zweiten Beschichtung mit ultraviolettem Licht und Ansehen des so produzierten leuchtenden Bilds hinsichtlich Lücken in oder Abweichungen der Leuchtintensität des Bilds, **dadurch gekennzeichnet, dass** die erste Beschichtung einen Anstrich in Beimischung mit einem leuchtenden Pigmentzusatz von weniger als 10 % Massenanteil beinhaltet und die zweite Beschichtung nicht leuchtend ist.

2. Verfahren gemäß Anspruch 1, wobei der Anstrich ein Anstrich auf Epoxidbasis ist.

3. Verfahren gemäß Anspruch 1, wobei der Anstrich ein Anstrich auf Ölbasis ist.

4. Verfahren gemäß einem der Ansprüche 1 bis 3, wobei der leuchtende Pigmentzusatz weniger als 1 % Massenanteil beträgt.

5. Verfahren gemäß einem der Ansprüche 1 bis 4, wobei das Bild digital aufgezeichnet wird.

6. Verfahren gemäß einem der Ansprüche 1 bis 5, wobei die Entfernung des Bilds von der für das digitale Aufzeichnen verwendeten Aufzeichnungsausrüstung gemessen wird und wobei die Leuchtgrade des Bilds mit einer Tabelle verglichen werden, die zuvor bestimmte Werte für die bekannte Dicke des Leuchtanstrichs, die als Standard verwendet werden, aufweist, um die Dicke der Beschichtung zu bestimmen.

## Revendications

1. Une méthode pour détecter la qualité ou la détérioration d'un revêtement comprenant :
appliquer un premier revêtement sur une surface propre,
appliquer un deuxième revêtement par-dessus ledit premier revêtement,
illuminer ledit deuxième revêtement avec un rayonnement ultraviolet et examiner l'image luminescente ainsi produite pour rechercher des écarts ou des variations dans l'intensité de la luminescence de l'image, **caractérisée en ce que** ledit premier revêtement comprend une peinture mélangée additionnellement à un additif de type pigments luminescents à raison de moins de 10 % en poids, et **en ce que** ledit deuxième revêtement n'est pas luminescent.

2. Une méthode selon la revendication 1 dans laquelle la peinture est une peinture à base d'époxy.

3. Une méthode selon la revendication 1 dans laquelle la peinture est une peinture à base d'huile.

4. Une méthode selon une quelconque des revendications 1 à 3 dans laquelle l'additif de type pigments luminescents représente moins de 1 % en poids.

5. Une méthode selon une quelconque des revendications 1 à 4 dans laquelle l'image est enregistrée sous forme numérique.

6. Une méthode selon une quelconque des revendications 1 à 5 dans laquelle la distance de l'image à l'équipement d'enregistrement utilisé pour l'enregistrement numérique est mesurée et dans laquelle les niveaux de luminescence provenant de l'image sont comparés à un tableau contenant des valeurs prédéterminées pour les épaisseurs connues de ladite peinture luminescente, utilisées en tant qu'étalon afin de déterminer l'épaisseur du revêtement.
